# EUROPEAN PATENT APPLICATION

(11) **EP 4 610 712 A1**
(43) Date of publication of application: **03.09.2025**
(21) Application number: 25161175.2
(22) Date of filing: 01.03.2025
(51) Int. Cl.: G02B 23/14, G02B 3/10, F41G 1/38

(54) **DUAL-VIEW FAR-FIELD MAGNIFYING BIFOCAL**

(30) Priority: 01.03.2024 US 202463560519 P; 24.02.2025 US 202519061866
(71) Applicant: Gilmer, Robert, Reno, NV 89519 (US)
(72) Inventor: Gilmer, Robert, Reno, NV 89519 (US)
(74) Representative: Perry, Clifford

(57) **Abstract**

A magnifying apparatus is provided. The magnifying apparatus is comprised of a lens including: a first region providing a first level of magnification, and a second region providing a second level of magnification that is different from the first level of magnification provided by the first region. The magnifying apparatus further includes a housing that at least partially encases the lens and that is configured for attachment to a user device.

## Description

### FIELD OF THE INVENTION

The present invention relates to magnifying apparatuses.

### BACKGROUND

The operation of firearms can be very dangerous. Every round fired from a firearm has the potential of causing death or serious injury. Identifying the threat and proper shot placement are both critical when trying to stop a violent life threatening attack. Misidentification or poor shot placement can cause a failure to protect life and the possible death or injury of innocent life.

Currently, some aiming devices are equipped with magnifiers. However, these magnifiers are limited to providing only a single magnified view.

There is thus a need for addressing these and/or other issues associated with the prior art. For example, there is a need for a dual view far field magnifying bifocal that can be incorporated into handgun support systems, observation systems, and aiming devices to enable more accurate threat identification and proper shot placement.

### SUMMARY

A magnifying apparatus is provided. The magnifying apparatus is comprised of a lens including: a first region providing a first level of magnification, and a second region providing a second level of magnification that is different from the first level of magnification provided by the first region. The magnifying apparatus further includes a housing that at least partially encases the lens and that is configured for attachment to a user device.

### BRIEF DESCRIPTION OF THE DRAWINGS

Figure **1A** illustrates a magnifying apparatus, in accordance with an embodiment.
Figure **1B** illustrates a lens of the magnifying apparatus of Figure **1A****,** in accordance with an embodiment.
Figure **2A** illustrates a sealed cylindrical magnifying apparatus, in accordance with an embodiment.
Figure **2B** illustrates an open cylindrical magnifying apparatus, in accordance with an embodiment.
Figure **2C** illustrates a sealed rectangular magnifying apparatus, in accordance with an embodiment.
Figure **2D** illustrates an open rectangular magnifying apparatus, in accordance with an embodiment.
Figure **3A** illustrates a magnifying apparatus coupled to a handgun rest, in accordance with an embodiment.
Figure **3B** illustrates use of a magnifying apparatus coupled to a handgun rest, in accordance with an embodiment.
Figure **3C** illustrates a magnifying apparatus and coupled red dot sight coupled to a handgun, in accordance with an embodiment.
Figure **3D** illustrates a magnifying apparatus coupled to a rifle scope, in accordance with an embodiment.
Figure **3E** illustrates a magnifying apparatus coupled to a sporting glasses frame, in accordance with an embodiment.
Figures **4A-4B** illustrate different orientations of a magnifying apparatus when viewed through by a user, in accordance with an embodiment.
Figure 5 illustrates various orientations of a magnifying apparatus, in accordance with an embodiment.

### DETAILED DESCRIPTION

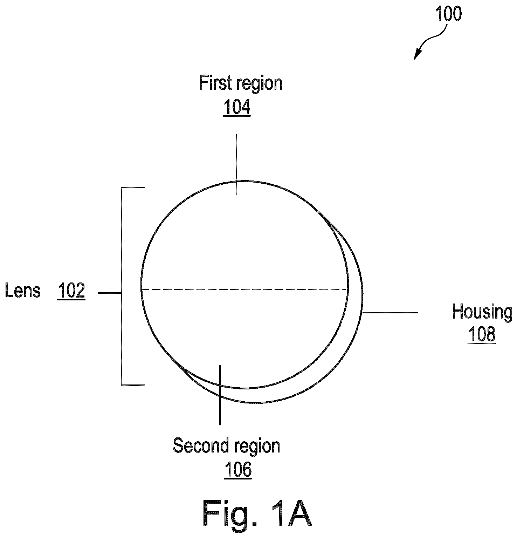

Figure **1A** illustrates a magnifying apparatus **100,** in accordance with an embodiment. The magnifying apparatus **100** may be formed with, at the very least, the features described herein with reference to Figure **1A****.** Of course, additional features may also be included, such as those described below with reference to the subsequent figures.

The magnifying apparatus **100** is a physical apparatus that includes a lens **102.** The lens **102** is comprised of a transparent material allowing a user to view therethrough. With respect to the present embodiment, the lens **102** includes a first region **104** providing a first level of magnification and a second region **106** providing a second level of magnification that is different from the first level of magnification provided by the first region.

In an embodiment, the lens **102** may be circular. In an embodiment, the lens **102** may be rectangular. Of course, the lens **102** may take any desired shape.

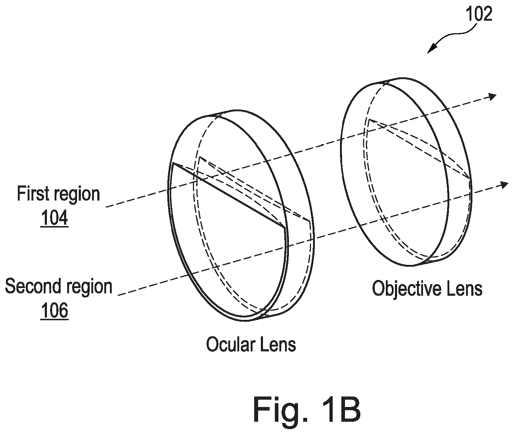

In an embodiment, the lens **102** may be comprised of an ocular lens portion and an objective lens portion. In an embodiment, the ocular lens portion may align with the objective lens portion to enable light to pass therethrough, or in other words to allow the user to view through both ocular and objective lens portions. Figure **1B** illustrates an exemplary configuration of the ocular and objective lens portions of the lens **102.**

As mentioned, the lens **102** includes first **104** and second **106** regions providing different first and second levels of magnification, respectively. These levels of magnification may be 1x, 2x, 3x, 6x, etc. In an embodiment, the first **104** and second **106** regions may cover a same size area of the lens. In another embodiment, the first **104** and second **106** regions may cover different size areas of the lens, for example where the region providing a smaller level of magnification covers a smaller or larger size area than the region provider a greater level of magnification.

In an embodiment, the lens **102** may be a far field lens. For example, the lens **102** may be configured to provide focus on an object at a range between 5 feet and 5000 feet from the lens **102.**

As shown, the magnifying apparatus **100** further includes a housing **108** that at least partially encases the lens **102** and that is configured for attachment to a user device. In an embodiment, the housing **108** may be of a similar or the same shape as the lens **102.**

In an embodiment, the housing **108** may be sealed. In an embodiment, the housing **108** may be open, or not sealed. In an embodiment, a barrier may also be at least partially encased by the housing **108.** The barrier (not shown) may be configured to reduce glare (from a light source) on the lens **102.**

As mentioned, the housing **108** is configured for attachment to a user device. The user device may be a sporting glasses frame, a handgun rest, a handgun, a rifle scope, etc. In this way, a user of the user device may view a target through the lens **102** of the magnifying apparatus **100.**

In one implementation, a user device may be comprised of the magnifying apparatus **100,** as described above, and a rigid structure coupled to the housing **108** of the lens **102** for allowing a user of the user device to view through the lens **102.** For example, the rigid structure may be a sporting glasses frame, a handgun rest that supports at least a portion of a grip of a handgun, a handgun, a rifle scope, etc. In embodiments, the magnifying apparatus **100** may be integrated with, or coupled to, an aiming device which may be a mechanical sight (iron sight), reflex sight (red dot sight), prism sight, fiber optic sight, holographic sight, pistol scope, rifle scope, thermal sight, night vision sight, etc.

In an embodiment, the housing **108** may be detachably coupled to the rigid structure. An attachment mechanism may be coupled to the housing **108** or to the rigid stricture of the user device for allowing the magnifying apparatus **100** to be attached and detached from the rigid stricture as desired.

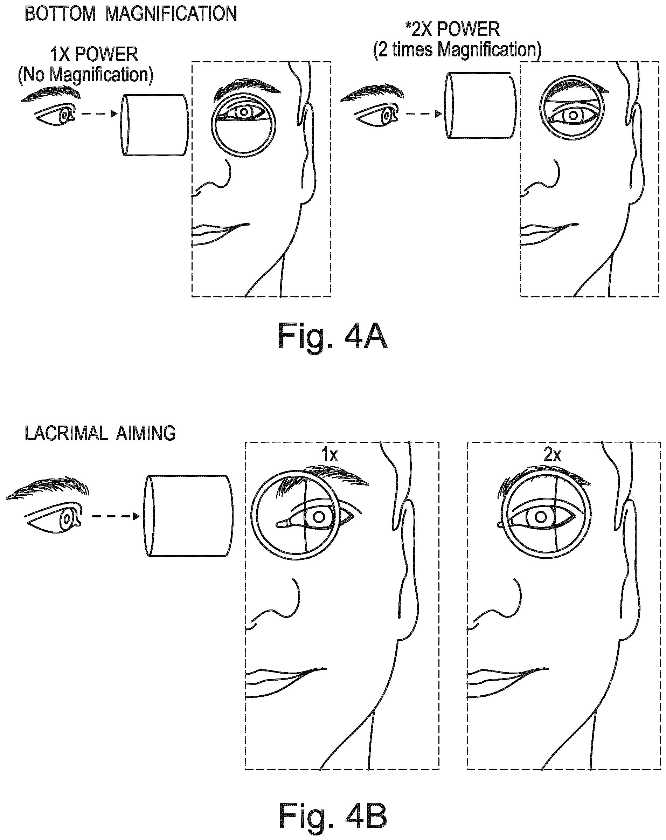

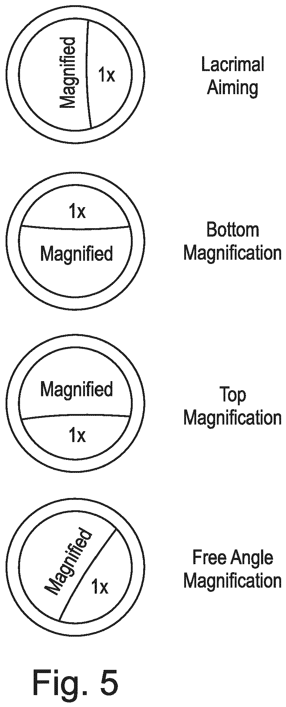

In an embodiment, the housing **108** may be rotatably coupled to the rigid structure. This may allow the user to rotate the magnifying apparatus **100** and thus the lens **102** thereof. As a result, the user may configure the placement of the first **104** and second **106** regions of the lens with respect to a viewing angle of the user through the lens **102.** Figures **4A-B** and 5 described below illustrates the lens **102** at different orientations.

In another embodiment (not shown), a magnifying apparatus may be provided which is comprised of a lens that provides a first level of magnification that is greater than 1x magnification, and which is comprised of a housing that is configured for attachment to a user device, where the housing at least partially encases the lens and provides an open throughview. The user can view through the open throughview for viewing without magnification and can view through the lens for viewing with magnification. This embodiment may be similarly integrated into the user device as described herein.

As stated in the background above, the operation of firearms can be very dangerous. Misidentification or poor shot placement can cause a failure to protect life and the possible death or injury of innocent life. Current magnifiers for aiming devices give a single magnified view of the aiming device. The present embodiment of Figure **1A** however provides a dual view far field magnifying bifocal which enables a simultaneous dual view (magnification) of a single aiming device.

For example, the dual view far field magnifying bifocal may enable a first responder to scan the area with a 1x reflex sight to find the threat. Once the target is acquired, the first responder simply changes their viewpoint through the lens **102** to view a 2x magnification of the target to verify the threat and take a precise shot. Both 1x and 2x views of a single reflex sight are now possible without manually adjusting the magnifying apparatus **100.** A 50 yard shot can be viewed as a 25 yard shot in a fraction of a second by simply gazing through the portion of the lens **102** with a higher level of magnification. During life threatening situations, rapid target acquisition and accurate shot placement are often the difference between who lives and who is lost.

Having a steady platform (rigid structure) for the dual view far field magnifying bifocal may be key to the operation of the user device. A nonattached handgun support with an integrated dual view far field magnifying bifocal may be one possible implementation. This combined system dramatically enhances the first responder's ability to be safe and accurate without changing the inherent operation of the handgun.

As mentioned, the dual view bifocal may be far field focusing, such that magnified objects at distance will be in focus. Further, the magnification can be made with any magnification power.

More illustrative information will now be set forth regarding various optional architectures and uses in which the foregoing method may or may not be implemented, per the desires of the user. It should be strongly noted that the following information is set forth for illustrative purposes and should not be construed as limiting in any manner. Any of the following features may be optionally incorporated with or without the exclusion of other features described.

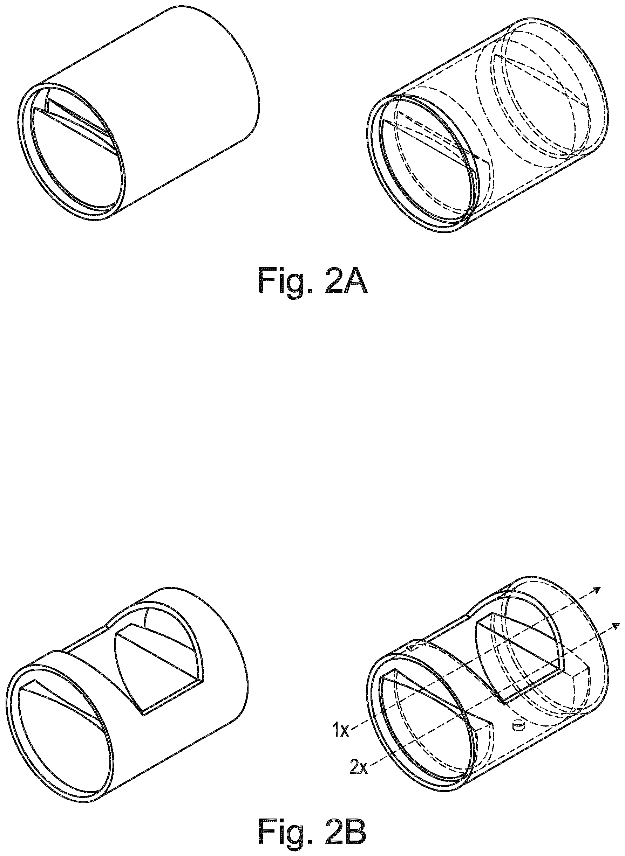

Figure 2A illustrates a sealed cylindrical magnifying apparatus, in accordance with an embodiment. The magnifying apparatus may be that described above with respect to Figure **1A****.** As shown, the lens is circular and is housed by a sealed cylindrical housing. In an embodiment, the cylindrical magnifying apparatus may be sealed with inert gas. A lens barrier may also be included to reduce glare and aid with aiming.

Figure **2B** illustrates an open cylindrical magnifying apparatus, in accordance with an embodiment. The magnifying apparatus may be that described above with respect to Figure **1A****.** As shown, the lens is circular and is housed by an open cylindrical housing. A lens barrier may also be included to reduce glare and aid with aiming.

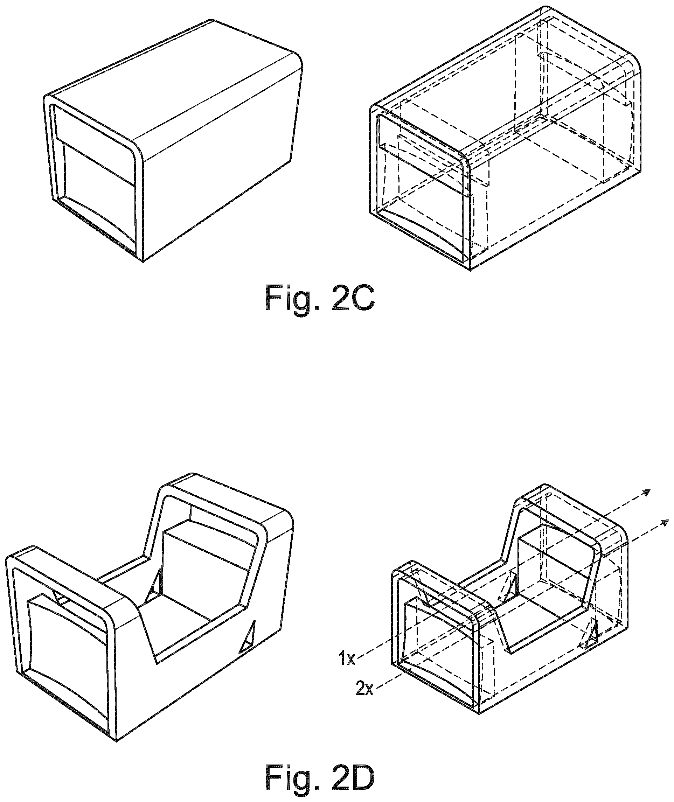

Figure **2C** illustrates a sealed rectangular magnifying apparatus, in accordance with an embodiment. The magnifying apparatus may be that described above with respect to Figure **1A****.** As shown, the lens is rectangular and is housed by a sealed block housing. In an embodiment, the rectangular magnifying apparatus may be sealed with inert gas. A lens barrier may also be included to reduce glare and aid with aiming.

Figure **2D** illustrates an open rectangular magnifying apparatus, in accordance with an embodiment. The magnifying apparatus may be that described above with respect to Figure **1A****.** As shown, the lens is rectangular and is housed by an openblock housing. A lens barrier may also be included to reduce glare and aid with aiming.

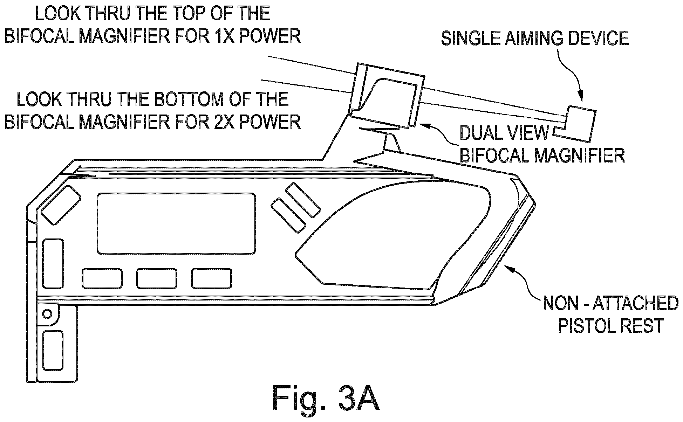

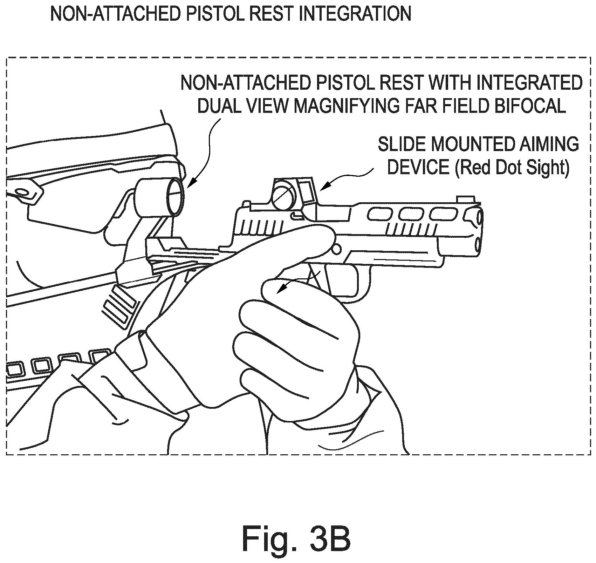

Figure **3A** illustrates a magnifying apparatus coupled to a handgun rest, in accordance with an embodiment. As shown, the magnifying apparatus is coupled to a rigid structure of the handgun rest. Figure **3B** illustrates use of a magnifying apparatus coupled to a handgun rest, in accordance with an embodiment.

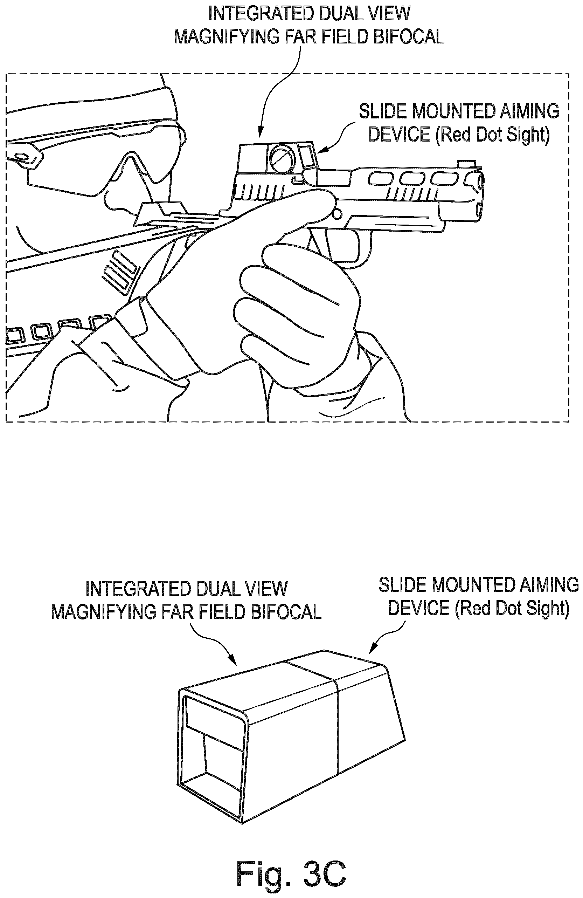

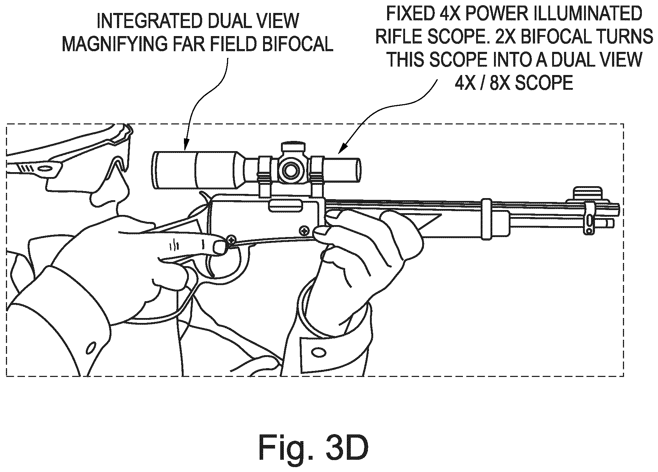

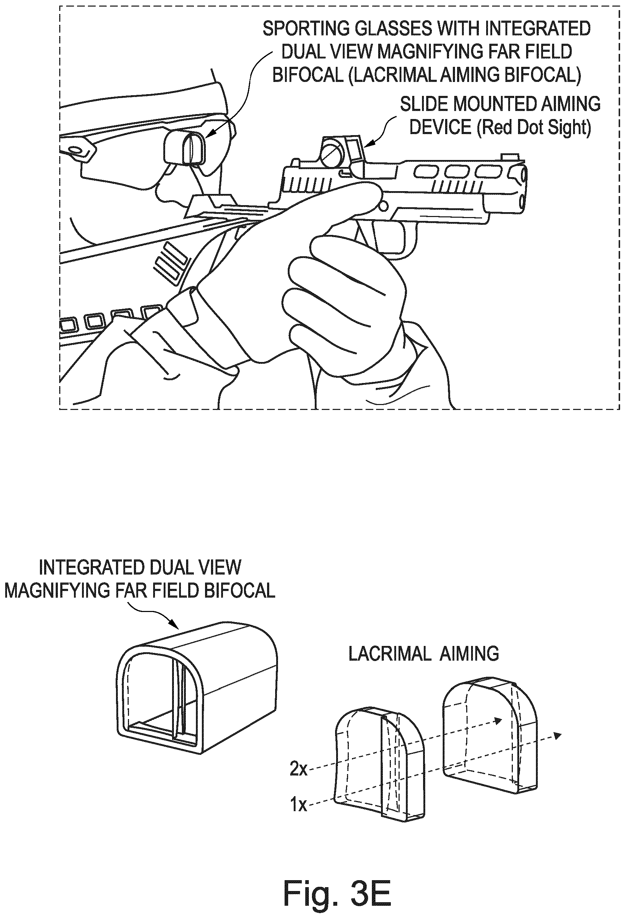

Figure **3C** illustrates a magnifying apparatus and coupled red dot sight coupled to a handgun, in accordance with an embodiment. Figure **3D** illustrates a magnifying apparatus coupled to a rifle scope, in accordance with an embodiment. Figure **3E** illustrates a magnifying apparatus coupled to a sporting glasses frame, in accordance with an embodiment.

Figures **4A-4B** illustrate different orientations of a magnifying apparatus when viewed through by a user, in accordance with an embodiment. Figure 5 illustrates various orientations of a magnifying apparatus, in accordance with an embodiment.

Embodiments of the present invention includes the following Concepts:
Concept 1. A magnifying apparatus, including (i) a lens including a first region providing (a) a first level of magnification, and (b) a second region providing a second level of magnification that is different from the first level of magnification provided by the first region; and (ii) a housing that at least partially encases the lens and that is configured for attachment to a user device.
Concept 2. The magnifying apparatus of Concept 1, wherein the lens is circular.
Concept 3. The magnifying apparatus of Concept 1, wherein the lens is rectangular.
Concept 4. The magnifying apparatus of Concept 1, wherein the lens includes an ocular lens portion and an objective lens portion.
Concept 5. The magnifying apparatus of Concept 4, wherein the ocular lens portion aligns with the objective lens portion to enable light to pass therethrough.
Concept 6. The magnifying apparatus of Concept 1, wherein the first region and the second region cover a same size area of the lens.
Concept 7. The magnifying apparatus of Concept 1, wherein the first region and the second region cover different size areas of the lens.
Concept 8. The magnifying apparatus of Concept 1, wherein the lens is configured to provide focus on an object at a range between 5 feet and 5000 feet from the lens.
Concept 9. The magnifying apparatus of Concept 1, wherein the housing is sealed.
Concept 10. The magnifying apparatus of Concept 1, wherein the housing is open.
Concept 11. The magnifying apparatus of Concept 1, further including a barrier at least partially encased by the housing that is configured to reduce glare on the lens.
Concept 12. A magnifying apparatus, including (i) a lens providing a first level of magnification that is greater than 1x magnification; and (ii) a housing that is configured for attachment to a user device, wherein the housing at least partially encases the lens and provides an open throughview.
Concept 13. A user device, including (i) a magnifying apparatus, that includes (a) a lens, that includes (1) a first region providing a first level of magnification, and (2) a second region providing a second level of magnification that is different from the first level of magnification provided by the first region, and (b) a housing that at least partially encases the lens; and (ii) a rigid structure coupled to the housing of the lens for allowing a user of the user device to view through the lens.
Concept 14. The user device of Concept 13, wherein the rigid structure is a sporting glasses frame.
Concept 15. The user device of Concept 13, wherein the rigid structure is a handgun rest that supports at least a portion of a grip of a handgun.
Concept 16. The user device of Concept 13, wherein the rigid structure is a handgun.
Concept 17. The user device of Concept 13, wherein the rigid structure is a rifle scope.
Concept 18. The user device of Concept 13, wherein the housing is detachably coupled to the rigid structure.
Concept 19. The user device of Concept 13, wherein the housing is rotatably coupled to the rigid structure.
Concept 20. The user device of Concept 13, further including a red dot sight coupled to the magnifying apparatus.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A magnifying apparatus, comprising:
a lens including:
a first region providing a first level of magnification, and
a second region providing a second level of magnification that is different from the first level of magnification provided by the first region; and
a housing that at least partially encases the lens and that is configured for attachment to a user device.

2. The magnifying apparatus of claim 1, wherein the lens is:
(i) circular, or
(ii) rectangular

3. The magnifying apparatus of claim 1, wherein the lens is comprised of an ocular lens portion and an objective lens portion.

4. The magnifying apparatus of claim 3, wherein the ocular lens portion aligns with the objective lens portion to enable light to pass therethrough.

5. The magnifying apparatus of claim 1, wherein the first region and the second region cover:
(i) a same size area of the lens; or
(ii) different size areas of the lens.

6. The magnifying apparatus of claim 1, wherein the lens is configured to provide focus on an object at a range between 5 feet and 5000 feet from the lens.

7. The magnifying apparatus of claim 1, wherein the housing is:
(i) sealed; or
(ii) open.

8. The magnifying apparatus of claim 1, further comprising:
a barrier at least partially encased by the housing that is configured to reduce glare on the lens.

9. A magnifying apparatus, comprising:
a lens providing a first level of magnification that is greater than 1x magnification; and
a housing that is configured for attachment to a user device, wherein the housing at least partially encases the lens and provides an open throughview.

10. A user device, comprising:
a magnifying apparatus as recited in any of claims 1-9 ; and
a rigid structure coupled to the housing of the lens for allowing a user of the user device to view through the lens.

11. The user device of claim 10, wherein the rigid structure is:
(i) a sporting glasses frame; or
(ii) a handgun rest that supports at least a portion of a grip of a handgun; or
(iii) a handgun; or
(iv) a rifle scope.

12. The user device of claim 10, wherein the housing is:
(i) detachably coupled to the rigid structure; or
(ii) rotatably coupled to the rigid structure.

13. The user device of claim 10, further comprising a red dot sight coupled to the magnifying apparatus.
